(19) Europäisches Patentamt
European Patent Office
Office européen des brevets

(11) Publication number: **0 424 218 A2**

(12) # EUROPEAN PATENT APPLICATION

(21) Application number: **90402836.2**

(51) Int. Cl.[5]: **G11B 7/26**

(22) Date of filing: **10.10.90**

(30) Priority: **18.10.89 JP 271198/89**

(43) Date of publication of application: **24.04.91 Bulletin 91/17**

(84) Designated Contracting States: **FR NL**

(71) Applicant: **PIONEER ELECTRONIC CORPORATION**
**No. 4-1, Meguro 1-chome**
**Meguro-ku Tokyo 153(JP)**

(72) Inventor: **Iida, Tetsuya, c/o Pioneer Electronic Corp.**
**Corp. Res. and Dev. Lab., No. 1-1, Fujimi 6-chome**
**Tsurugashimamachi, Iruma-gun, Saitama(JP)**
Inventor: **Higuchi, Takanobu, c/o Pioneer Electronic Corp.**
**Corp. Res. and Dev. Lab., No. 1-1, Fujimi 6-chome**
**Tsurugashimamachi, Iruma-gun, Saitama(JP)**
Inventor: **Ogoshi, Kunizo, c/o Pioneer Electronic Corp.**
**Corp. Res. and Dev. Lab., No. 1-1, Fujimi 6-chome**
**Tsurugashimamachi, Iruma-gun, Saitama(JP)**
Inventor: **Yokozeki, Shinichi, c/o Pioneer Electronic Corp.**
**Corp. Res. and Dev. Lab., No. 1-1, Fujimi 6-chome**
**Tsurugashimamachi, Iruma-gun, Saitama(JP)**

(74) Representative: **Joly, Jean-Jacques et al**
**CABINET BEAU DE LOMENIE 55, rue d'Amsterdam**
**F-75008 Paris(FR)**

(54) **Processing for producing optical disk.**

(57) A metal-film information recording surface of a master disk (3a) is supplied with a liquid stamper-forming photopolymer (11) that is curable and strippable therefrom. A stamper substrate (16) is then applied to force the agent to fill the space between the stamper substrate and the principal surface of the master disk. The stamper-forming photopolymer is cured with UV rays to form an information recording layer on the principal surface of the stamper substrate. The stamper substrate (ii) is stripped from the master disk together with the stamper information recording layer to form a resin stamper, which is then fixed. The stamper information recording surface of the resin stamper is supplied with a liquid replica-forming photopolymer that is UV curable and is strippable from the stamper information recording surface. A transparent replica substrate is then applied to force the photopolymer to fill the space between the replica substrate and the principal surface of the stamper information recording surface. The photopolymer is cured with UV rays, whereby a replica information recording layer of the cured replica-forming photopolymer is formed on the principal surface of the replica substrate. Finally, the replica substrate is stripped from the resin stamper together with the replica information recording layer.

EP 0 424 218 A2

FIG. 2C

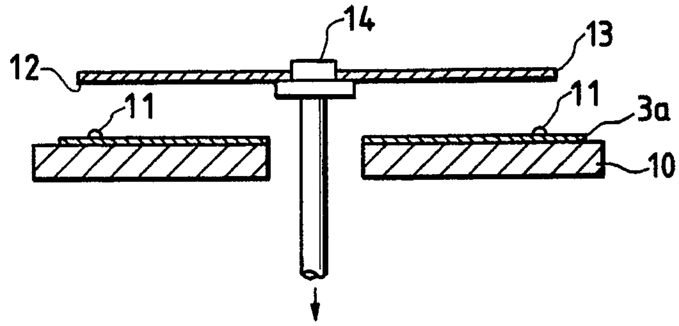


FIG. 2D

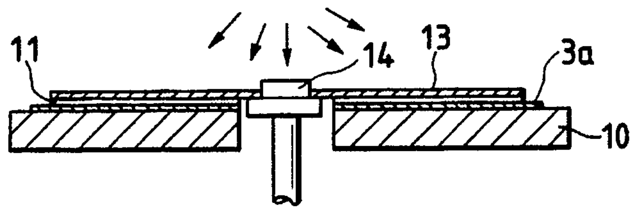


FIG. 2E

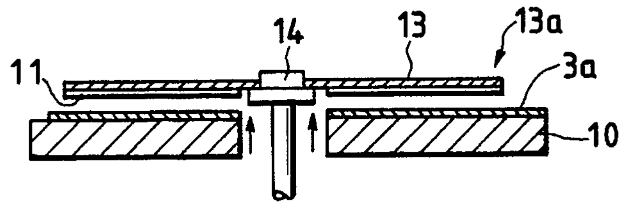

# PROCESSING FOR PRODUCING OPTICAL DISK

## BACKGROUND OF THE INVENTION

The present invention relates to a process for producing optical disks such as a video disk and a compact disk.

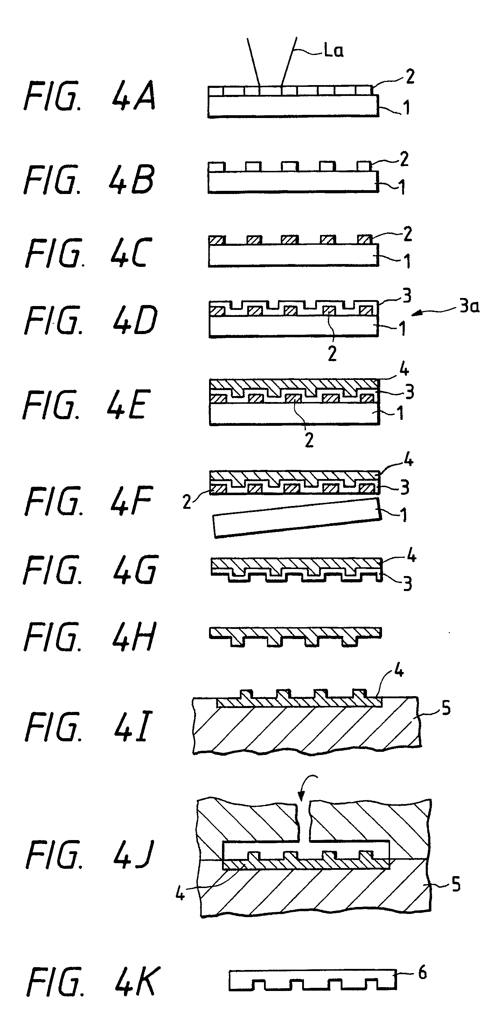

Fig. 3 shows a flowchart of a conventional process for producing optical disks. This process starts with preparing a photoresist-coated disk having a photoresist layer 2 formed on the principal surface of a glass disk 1, as shown in Fig. 4A. In a laser cutting step $S_0$, a track containing spots in a pattern encoding predetermined information is formed spirally or concentrically on the photoresist layer 2 by means of a laser beam La. In the next step $S_1$ of developing, the exposed photoresist-coated disk is set in a developing apparatus and developed to form a series of small asperities (hereinafter referred to as "pits") on the disk in association with the signal to be recorded, whereby a developed disk is obtained which, as shown in Fig. 4B, is composed of the glass disk 1 and the photoresist layer 2, the latter forming an information recording layer with pits. In a post-baking step $S_2$, the photoresist layer 2 of the developed disk is dried to fix it on the glass disk 1, whereby a dried disk is obtained as shown in Fig. 4C. In the next step $S_3$, silver sputtering is performed to form an electroconductive silver film 3 on the photoresist layer 2, whereby a dual-layer master disk 3a is obtained, as shown in Fig. 4D. Thus, the information recording surface with pits is rendered electrically conductive by forming a sputtered metal film over the photoresist layer with pits. The steps $S_0$ to $S_3$ thus constitute steps for preparing a master disk.

The subsequent stage is for preparing a Ni stamper, and it starts with a Ni electroforming step $S_4$. The master disk is dipped in a nickel electroforming bath to plate the conductive silver film 3 with nickel (Ni), whereby a nickel stamper having a thick nickel layer 4 is obtained, as shown in Fig. 4E. In the next stamper separating step $S_5$, the stamper having the nickel layer 4 is separated from the glass disk 1, as shown in Fig. 4F. In the next photoresist stripping step $S_6$, the photoresist layer 2 is stripped from the conductive silver film 3, as shown in Fig. 4G. For photoresist stripping, an alkali solution or a commercial organic solvent is employed. In the next silver stripping step $S_7$, the conductive silver film 3 is stripped from the nickel layer 4. In a stamper working step $S_8$, the profile of the nickel layer 4 is worked to obtain a desired nickel stamper as shown in Fig. 4H. The steps $S_4$ to $S_8$ are thus intended for preparing a nickel stamper.

The next stage, which is an injection molding cycle for preparing a replica, starts with setting the nickel stamper in a predetermined position on an injection molding machine 5, as shown in Fig. 4I. This is a stamper setting step $S_9$. After clamping, as shown in Fig. 4J, the injection molding machine 5 is actuated to inject a molten transparent resin material such as PMMA (polymethyl methacrylate) or PC (polycarbonate) onto the nickel stamper. After the injected resin material cures, it is ejected as a replica of optical disk having a desired information recording surface, as shown in Fig. 4K. This is an injection molding step $S_{10}$. Steps $S_9$ and $S_{10}$ are those for preparing an optical disk replica.

The thus-obtained replica has a reflective film formed of aluminum or some other suitable material on the information recording surface by a known method (step $S_{11}$). The reflective film is overcoated with a protective film (step $S_{12}$) to form an optical disk. Two such optical disks are bonded together (step $S_{13}$), and the assembly is subjected to a finishing step $S_{14}$ to produce a finished, usually double-sided, optical disk.

The conventional process described above has the problems that too many steps are involved following the electroforming step until the Ni stamper is prepared and that it takes an unduly long time to form a Ni plate. Further, the injection molding machine for preparing the replicas is of a relatively large size so that it is cumbersome to change stampers. The conventional process can be practiced satisfactorily if it is applied to mass production of optical disks, but it is not ideal for producing optical disks such as those containing audio-visual software in small quantities and in a large assortment.

Moreoever, the injection molding machine and the electroforming bath are also bulky, so that the plant facilities are unavoidably large, contributing to an increase in the production cost of optical disks.

## SUMMARY OF THE INVENTION

An object, therefore, of the present invention is to provide a process for producing optical disks using fewer steps and which is adapted not only to mass production of disks of a single type, but also to

production of many types of disks in small quantities.

This and other objects of the present invention are attained by a process for producing an optical disk that comprises the steps of:

i) fixing a master disk having a metal film that covers an information recording surface having small asperities;

ii) supplying the information recording surface with a liquid stamper-forming photopolymer that is curable and strippable from the metal film;

iii) placing a transparent stamper substrate on the master disk with the stamper-forming photopolymer being interposed, whereby the photopolymer is made to reach every part of the space between the stamper substrate and the principal surface of the master disk;

iv) irradiating the stamper-forming photopolymer with UV rays so that it cures, whereby a stamper information recording layer of the cured stamper-forming photopolymer is formed on the principal surface of the stamper substrate;

v) stripping the stamper substrate from the master disk together with the stamper information recording layer so as to form a resin stamper that is composed of the stamper information recording layer and the stamper substrate which carried it;

vi) fixing the thus-obtained resin stamper;

vii) supplying the stamper information recording surface of the resin stamper with a liquid replica-forming photopolymer that is UV curable and is strippable from the stamper information recording surface;

viii) placing a transparent replica substrate on the stamper information recording surface with the replica-forming photopolymer interposed, whereby the photopolymer is caused to reach every part of the space between the replica substrate and the principal surface of the stamper information recording surface;

ix) irradiating the replica-forming photopolymer with UV rays so that it cures, whereby a replica information recording layer of the cured replica-forming photopolymer is formed on the principal surface of the replica substrate; and

x) stripping the replica substrate from the resin stamper together with the replica information recording layer so as to form a replica of an optical disk that is composed of the replica information recording layer and the replica substrate which carries it.

## BRIEF DESCRIPTION OF THE DRAWINGS

Figs. 1 is a flowchart showing essential steps of producing an optical disk by the process of the present invention;

Figs. 2A - 2J show schematic cross sections of members being subjected to 2 P transfer steps in the process shown in Fig. 1;

Fig. 3 is a flowchart of a conventional process for producing an optical disk; and

Figs. 4A - 4K show schematic cross sections of members being subjected to the individual steps in the process shown in Fig. 3.

## DESCRIPTION OF THE PREFERRED EMBODIMENTS

The photopolymers used in the process of the present invention are materials that cure from a fluid to a solid state upon exposure to radiations such as UV rays. The stamper-forming photopolymer which is readily strippable from metals contains:

i) a major component monomer that is a benzene ring containing bifunctional acrylate or methacrylate represented by the following formula (A1):

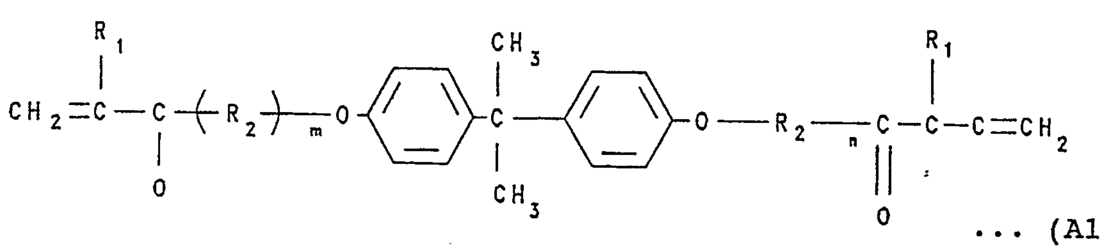

... (A1)

where $R_1$ is H or $CH_3$, $R_2$ is $-CH_2CH_2O-$ or

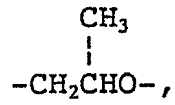

and the sum of m and n is an integer of from 2 to 10 (m ≧ 1, n ≧ 1);

ii) a minor component monomer that is a fluorine containing, monofunctional acrylate or methacrylate represented by the following formula (A2):

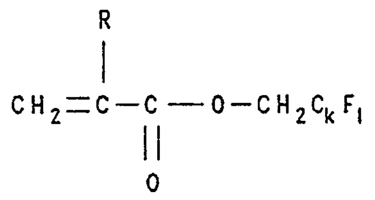

... (A2)

where $R_1$ is H or $CH_3$; k is an integer of from 1 to 8; and ℓ is an integer of from 3 to 8; and

iii) a photopolymerization initiator present in an amount of 1 - 10 wt% of the total composition, provided that the weight ratio of the major component monomer to the minor component monomer is within the range of from 90:10 to 99.9:0.1.

The stamper-forming photopolymer described above which is readily strippable from a metal is hydrophobic since fluorine and benzene rings are nonpolar. Containing such hydrophobic fluorine atoms and benzene rings in the backbone of the molecular structures of the minor and major component monomers, the stamper-forming photopolymer will, upon curing, have desirably high strippability from metals. Further, from a hydrophobicity viewpoint, it is effective for the fluorine-containing minor component monomer to have fluorine atoms oriented on the surface of the layer of photopolymer. To this end, the fluorine-containing monomer is preferably monofunctional because fluorine atoms remain free in the crosslinked structure. This fluorine-containing monomer also has the advantage of helping improve the strippability from the replica-forming photopolymer during replica preparation.

The stamper-forming photopolymer is also effective in improving the transferability of the photopolymer being spread in the transfer step. This is because the fluorine-containing monomer also functions as a surfactant and improves the wettability with metal films such as silver and aluminum films to thereby reduce the angle of dynamic contact during transfer. As another advantage, the formation of voids is prevented, thus ensuring that the cured photopolymer will be transferred with increased precision. On the other hand, the system of the photopolymer has a lower surface tension and can be filtered at a greater speed than monomers of the same viscosity.

Further, the stamper-forming photopolymer helps form a durable stamper and shrinks by only a small degree upon curing because the part of the backbone of major component monomer represented by $R_2$ in the formula (A1) retards the shrinkage of the photopolymer during the curing process. In order to provide enhanced durability, the major component monomer has to be crosslinked. For crosslinking, the major component monomer s must be polyfunctional with a functionality of at least two. Monomers with a functionality of three or more have the advantage of curing at high speed, but on the other hand the resulting photopolymer will shrink excessively upon curing, causing a decrease both in the precision of transfer and in the adhesion to coupling agents. Therefore, the major component monomer will have the best balance in properties if it is a bifunctional monomer.

In the stamper-forming photopolymer, the addition of a low-viscosity monomer, for instance, a photopolymerization initiator is limited to no more than 10 wt% of the total composition, so that there is no possibility that the photoresist layer on the master disk will be attacked by the stamper-forming photopolymer. Photopolymer systems containing more than 10 wt% of monomers with low viscosities (no more than 100 cPs irrespective of monomer type) have a tendency to attack the photoresist layer.

The stamper-forming photopolymer under consideration has the additional advantage that it has good UV curability. The major component monomer having benzene rings in the backbone show a strong absorption in the UV range, and thus a thin film or layer of the photopolymer will absorb UV radiation with an increased efficiency to cure at an accelerated rate.

The replica-forming photopolymer which is to form a finished replica of optical disk is readily strippable

from the resin stamper which is formed of the stamper-forming photopolymer described above. This replica-forming photopolymer contains:

i) a first monomer that is a polyfuntional acrylate or methacrylate containing neither polar groups nor benzene rings and which is represented by the following formula (B1):

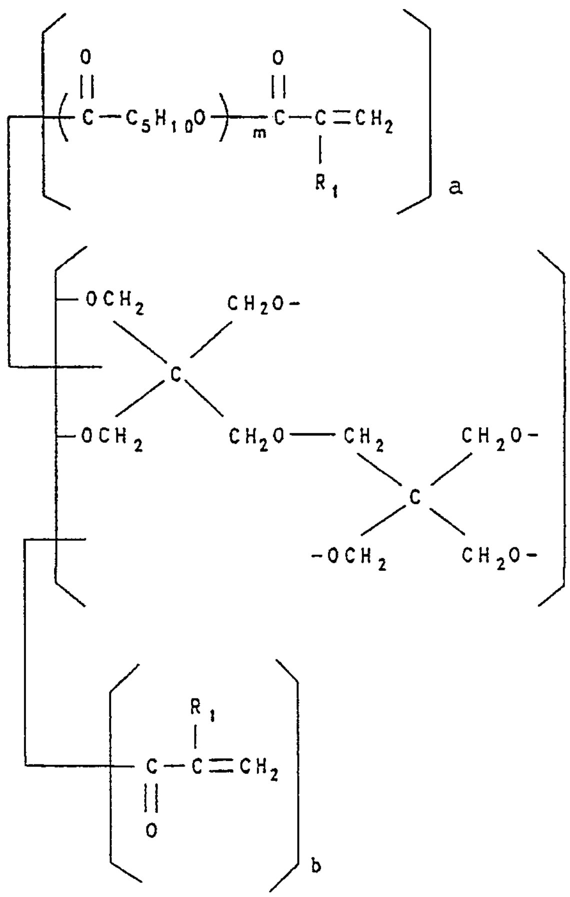

... (B1)

where $R_1$ is H or $CH_3$, m is an integer of from 1 to 3, a is an integer of from 1 to 6, and b is an integer of from 0 to 6, provided that the sum of a + b is 6;

ii) a second monomer that is an acrylate or methacrylate shrinking by only a small degree upon curing and which is represented by the following formula (B2):

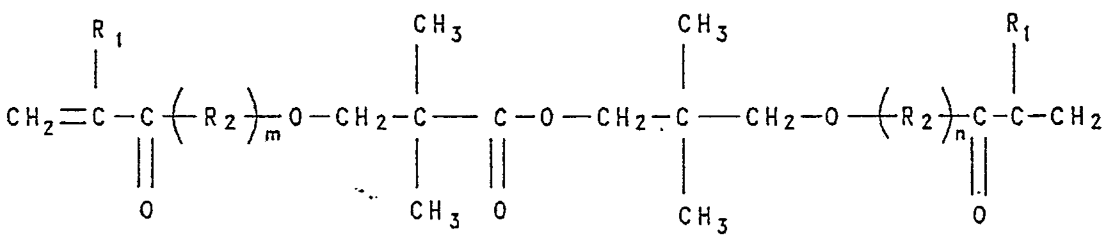

... (B2)

where $R_1$ is H or $CH_3$, $R_2$ is $-OC_5H_{10}CO-$, and the sum of m + n is an integer of from 2 to 20 ($m \geqq 1$, $n \geqq 1$);

iii a third monomer that is a diluted, low-viscosity acrylate or methacrylate and which is represented by the following formula (B3):

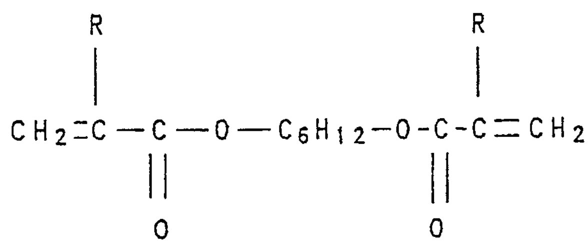

... (B3)

where R is H or $CH_3$; and

iv) a photopolymerization initiator present in an amount of 1 - 10 wt% of the total composition, provided that the weight ratio of the first monomer to the second monomer to the third monomer is (5 - 30):(20 - 70):(10 - 60).

The replica-forming photopolymer described above does not use any monomers that contain polar groups such as -OH, -COOH and -NH groups, and hence it is readily strippable from the resin stamper. A replica made of monomers having molecular structures similar to those of the monomer components in the resin stamper have poor strippability from the resin stamper. To avoid this problem, the replica-forming photopolymer employs monomers having different molecular structures than the monomer components of the resin stamper. Since the major component monomer in the resin stamper has backbone benzene rings, the replica-forming photopolymer should employ an aliphatic monomer, an alicyclic monomer and other monomeric units that are free from backbone benzene rings.

The replica-forming photopolymer under consideration has high curability. To provide improved curability, this photopolymer uses a bi- to hexafunctional monomer as the first monomer.

This replica-forming photopolymer also has the advantage that it shrinks by only a small degree upon curing, whereby strong adhesion to the PMMA substrate is insured. To reduce the degree of shrinkage upon curing, a low-shrinkage monomer is used as the second monomer since the backbone of the second monomer which is represented by $R_2$ in the formula (B2) helps retard the shrinkage of the photopolymer upon curing. The use of this low-shrinkage monomer contributes to an enhanced adhesion between the replica substrate and the PMMA substrate since a minimum displacement will occur between the two substrates during the curing process. The replica-forming photopolymer also serves to reduce the modulus of elasticity so that it can be readily stripped from the resin stamper while insuring precise transfer.

The replica-forming photopolymer under consideration has the additional advantage that it can be filtered at a fast rate since it contains an aliphatic diluted monomer as the third monomer. To improve the rate of filtration and the precision of transfer, the viscosity of the monomers must be reduced. The viscosity of the replica-forming photopolymer can be adjusted by controlling the compositional proportion of the diluted monomer in the composition. The third polymer may be either aliphatic or alicyclic because both types of monomers have only small absorption in the UV range and hence will provide enhanced lightfastness (resistance to discoloration for the layer of photopolymer in the resin stamper. The weight ratio of the first monomer to the second monomer to the third monomer is desirably (5 - 30):(20 - 70):(10 - 60).

The present invention will be described below more specifically with reference to Figs. 1 and 2A - 2J. Fig. 1 shows a flowchart of the process for producing an optical disk according to the present invention. Up to the silver sputtering step $S_3$ for preparing a master disk, the process of the present invention is identical to the conventional process shown in Fig. 3. However, the process of the present invention differs from the prior art with respect to the steps of preparing a nickel stamper and a replica.

In the step of preparing a stamper, a so-called "2 P transfer process" which forms a transfer layer of cured photopolymer is employed in such a way that the silver coated master disk prepared in the silver sputtering step $S_3$ is used as a mold, with the information recording surface being transferred onto a stamper substrate, or a glass disk, by means of the stamper-forming photopolymer to form a resin stamper, not a nickel stamper as in the prior art process.

The sequence of the 2 P transfer process is shown specifically in Figs. 2A - 2K. It starts with placing the master disk 3a horizontally on the table 10 of a transfer apparatus, with the information recording surface covered with a metal film facing up, as shown in Fig. 2A (master disk fixing step $S_{21}$). Subsequently, as shown in Fig. 2(b), a liquid stamper-forming photopolymer 11 which is readily strippable from the metal film is applied onto the information recording surface of the master disk 3a (photopolymer supplying step $S_{22}$). Then, as shown in Fig. 2C, a transparent glass disk 13, preliminarily coated with a silane coupling agent 12, is placed on top of the stamper substrate holder 14 of the transfer apparatus, which holder 14 is lowered with the glass disk 13 held horizontally until it is placed concentrically over the master disk 3a, with the stamper-forming photopolymer 11 being interposed, and the glass disk 13 is

subsequently held in position in such a way that the stamper-forming photopolymer 11 spreads to reach every part of the space between the glass disk 13 and the master disk 3a (photopolymer spreading step $S_{23}$). Thereafter, as shown in Fig. 2D, UV radiation (indicated by arrows) is applied to the stamper-forming photopolymer 11 from above the glass disk 13, whereby the photopolymer 11 cures to form an information recording layer made of the cured stamper-forming photopolymer on the principal surface of the glass disk 13, that is, the information recording layer of the master disk is transferred onto the glass disk 13 (UV radiation applying step $S_{24}$). Then, as shown in Fig. 2E, the glass disk 13 is separated from the master disk 3a together with the information recording layer of stamper-forming photopolymer, whereby a resin stamper 13a is obtained that is composed of the information recording layer of the stamper-forming photopolymer 11 and the glass disk 13 which carries it (separating step $S_{25}$). In the above-described process for preparing the resin stamper, a conventionally known "2 P transfer apparatus" for performing the 2 P transfer process is employed and the necessary steps that are subsequent to the fixing of the master disk 3a and which end with the recovery of the resin stamper 13a can be performed automatically.

In subsequent steps, a replica is fabricated using the recovered resin stamper 13a as a mold. The process of replica fabrication is not performed by injection molding molten PMMA or PC as in the prior art, but by the 2 P transfer process and apparatus as in the above-described process of preparing the resin stamper. In other words, the information recording surface is transferred onto a replica substrate, namely, a cured substrate with the aid of the replica-forming photopolymer to form a replica of optical disk.

Stated more specifically, the resin stamper 13a is placed horizontally on the table 10 of another transfer apparatus with the information recording surface of the stamper facing up, as shown in Fig. 2F (stamper fixing step $S_{26}$). Subsequently, as shown in Fig. 2G, a liquid replica-forming photopolymer 21 which is readily strippable from the cured stamper-forming photopolymer 11 is applied onto the information recording surface of the resin stamper 13a (photopolymer supplying step $S_{27}$). Then, as shown in Fig. 2(h), a transparent PMMA disk 23, preliminarily coated with a photopolymer 12 to provide improved adhesion, is placed on top of the stamper substrate holder 14 of the transfer apparatus, which holder 14 is lowered with the PMMA disk 23 held horizontally until it is placed concentrically over the resin stamper 13a, with the replica-forming photopolymer 21 being interposed, and the PMMA disk 23 is held in position in such a way that the replica-forming photopolymer 21 spreads to reach every part of the space between the PMMA disk 23 and the resin stamper 13a (photopolymer spreading step $S_{28}$). Thereafter, as shown in Fig. 2I, UV radiation (indicated by arrows) is applied to the replica-forming photopolymer 21 from above the PMMA disk 23, whereby the photopolymer 21 cures to form an information recording layer made of the cured replica-forming photopolymer on the principal surface of the PMMA disk 23, that is, the information recording layer of the resin stamper is transferred on the PMMA disk 23 (UV radiation applying step $S_{29}$). Then, as shown in Fig. 2J, the PMMA disk 23 is separated from the resin stamper 13a together with the information recording layer of replica-forming photopolymer, whereby an optical disk replica, generally referred to as a "2 P replica", is obtained that is composed of the information recording layer of the replica-forming photopolymer 21 and the PMMA disk 23 which carries it (separating step $S_{30}$). In this process of fabricating the 2 P replica, a 2 P transfer apparazo tus is also employed and the necessary steps that are subsequent to the fixing of the resin stamper 13a and which end with the recovery of the fabricated replica can be performed automatically.

The thus-obtained replica has a reflective film formed of aluminum or some other suitable material on the information recording surface by a known method, and the reflective film is overcoated with a protective film. Two of such replicas of optical disk are bonded together and the assembly is subjected to a finishing step to produce a finished double-sided optical disk.

As described above, the process of the present invention for producing an optical disk adopts a 2 P transfer method not only in forming a resin stamper from a master disk, but also in forming a replica from said resin stamper. This approach has the advantage of simplifying the process of fabricating both a resin stamper and a replica, whereby optical disks that are suitable for use for audio-visual software produced in small quantities but in a large assortment can be produced with good commercial feasibility.

## EXAMPLE

Optical disk replicas were produced by the process of the present invention. Acrylate resin "OV-1008" produced by Hitachi Chemical Co., Ltd., was used as the resin stamper-forming photopolymer which is readily strippable from metals. Each of acrylate resins, "OV-1022", "OV-1024" and "OV-1026", produced by Hitachi Chemical Co., Ltd. was used as the replica-forming photopolymer which is readily strippable

from the resin stamper and from which a finished optical disk was to be formed. Each of the replicas could be produced with less than one half the time required by the prior art process which involves first preparing a nickel stamper by electroforming and then fabricating a replica from said nickel stamper by injection molding.

## Claims

1. A process for producing an optical disk that comprises the steps of:

i) fixing a master disk having a metal film that covers an information recording surface having small asperities;

ii) supplying said information recording surface with a liquid stamper-forming photopolymer that is UV curable and that is strippable from the metal film;

iii) placing a transparent stamper substrate on said master disk with said stamper-forming photopolymer being interposed, whereby said photopolymer is caused to reach every part of the space between said stamper substrate and the principal surface of said master disk;

iv) irradiating said stamper-forming photopolymer with UV rays so that it cures, whereby a stamper information recording layer of the cured stamper-forming photopolymer is formed on the principal surface of said stamper substrate;

v) stripping said stamper substrate from said master disk together with said stamper information recording layer so as to form a resin stamper that is composed of said stamper information recording layer and said stamper substrate which carried it;

vi) fixing the thus-obtained resin stamper;

vii) supplying said stamper information recording surface of said resin stamper with a liquid replica-forming photopolymer that is UV curable and that is strippable from said stamper information recording surface;

viii) placing a transparent replica substrate on said stamper information recording surface with said replica-forming photopolymer being interposed, whereby said photopolymer is caused to reach every part of the space between said replica substrate and the principal surface of said stamper information recording surface;

ix) irradiating said replica-forming photopolymer with UV rays so that it cures, whereby a replica information recording layer of the cured replica-forming photopolymer is formed on the principal surface of said replica substrate; and

x) stripping said replica substrate from said resin stamper together with said replica information recording layer so as to form a replica of an optical disk that is composed of said replica information recording layer and said replica substrate which carries it.

FIG. 1

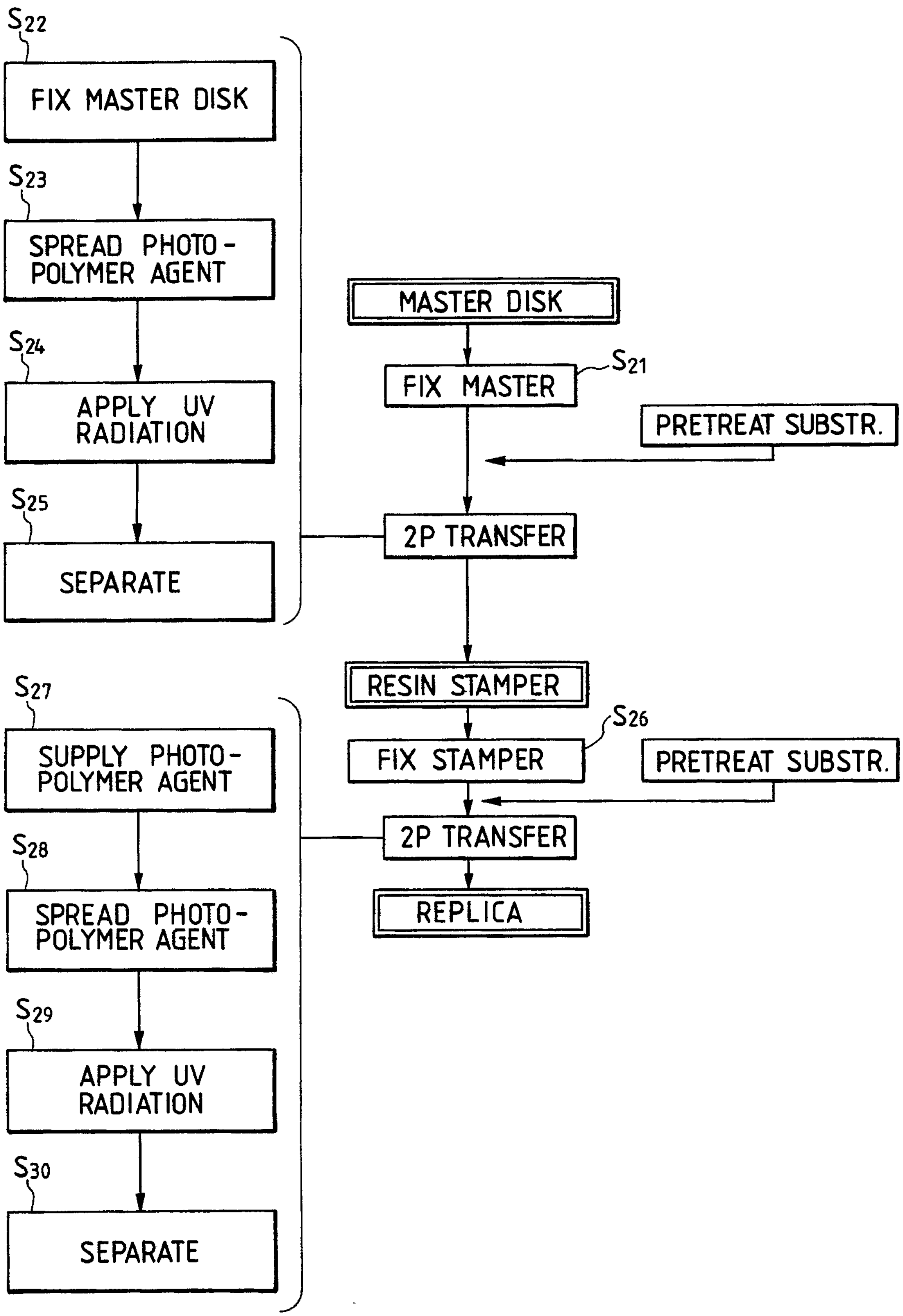
S22
FIX MASTER DISK
S23
SPREAD PHOTO-POLYMER AGENT
S24
APPLY UV RADIATION
S25
SEPARATE
MASTER DISK
FIX MASTER
S21
PRETREAT SUBSTR.
2P TRANSFER
RESIN STAMPER
S26
FIX STAMPER
PRETREAT SUBSTR.
2P TRANSFER
REPLICA
S27
SUPPLY PHOTO-POLYMER AGENT
S28
SPREAD PHOTO-POLYMER AGENT
S29
APPLY UV RADIATION
S30
SEPARATE

FIG. 2A

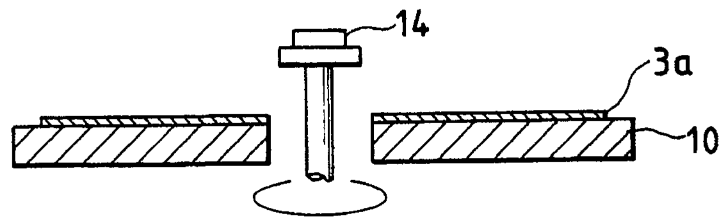


FIG. 2B

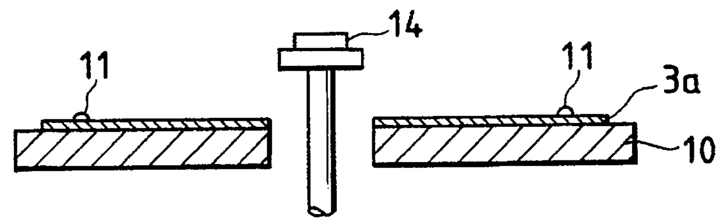


FIG. 2C

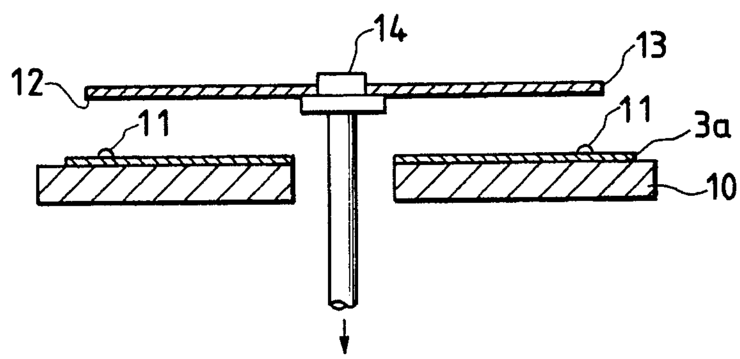


FIG. 2D

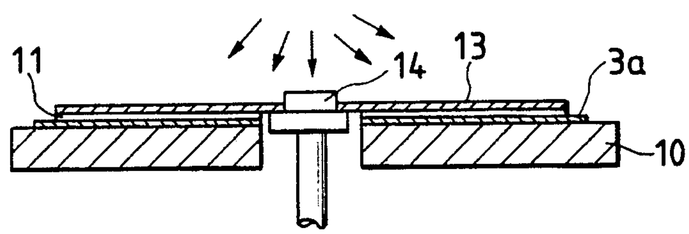


FIG. 2E

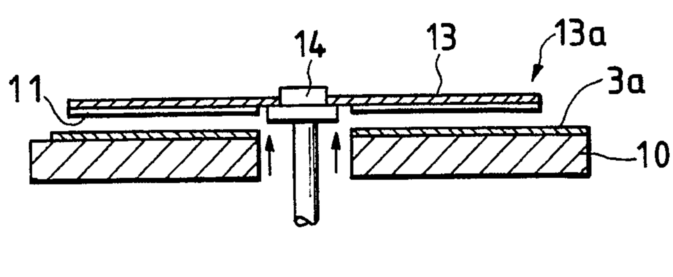

FIG. 2F

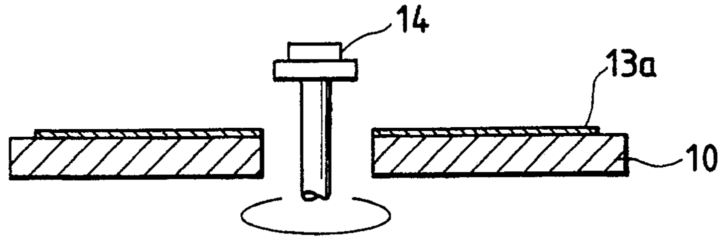


FIG. 2G

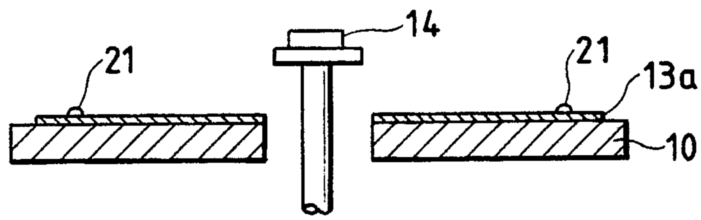


FIG. 2H

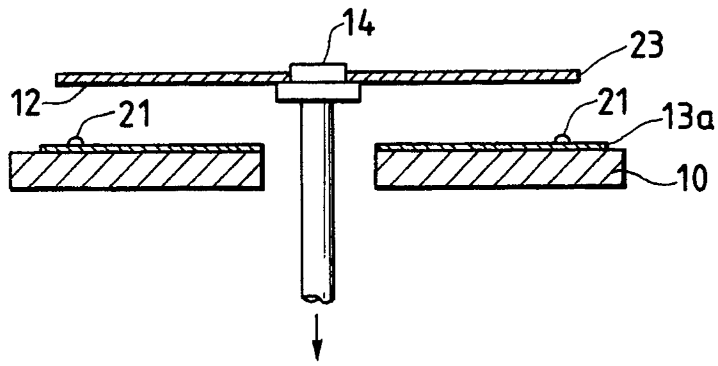


FIG. 2I

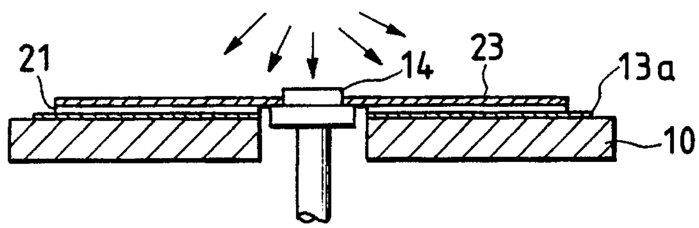


FIG. 2J

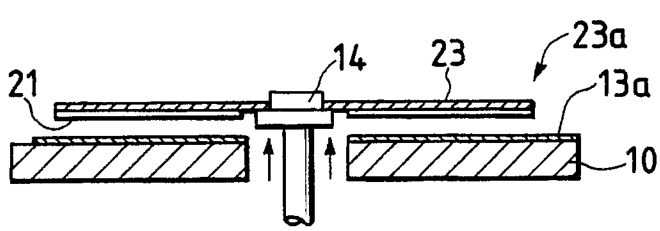

FIG. 3

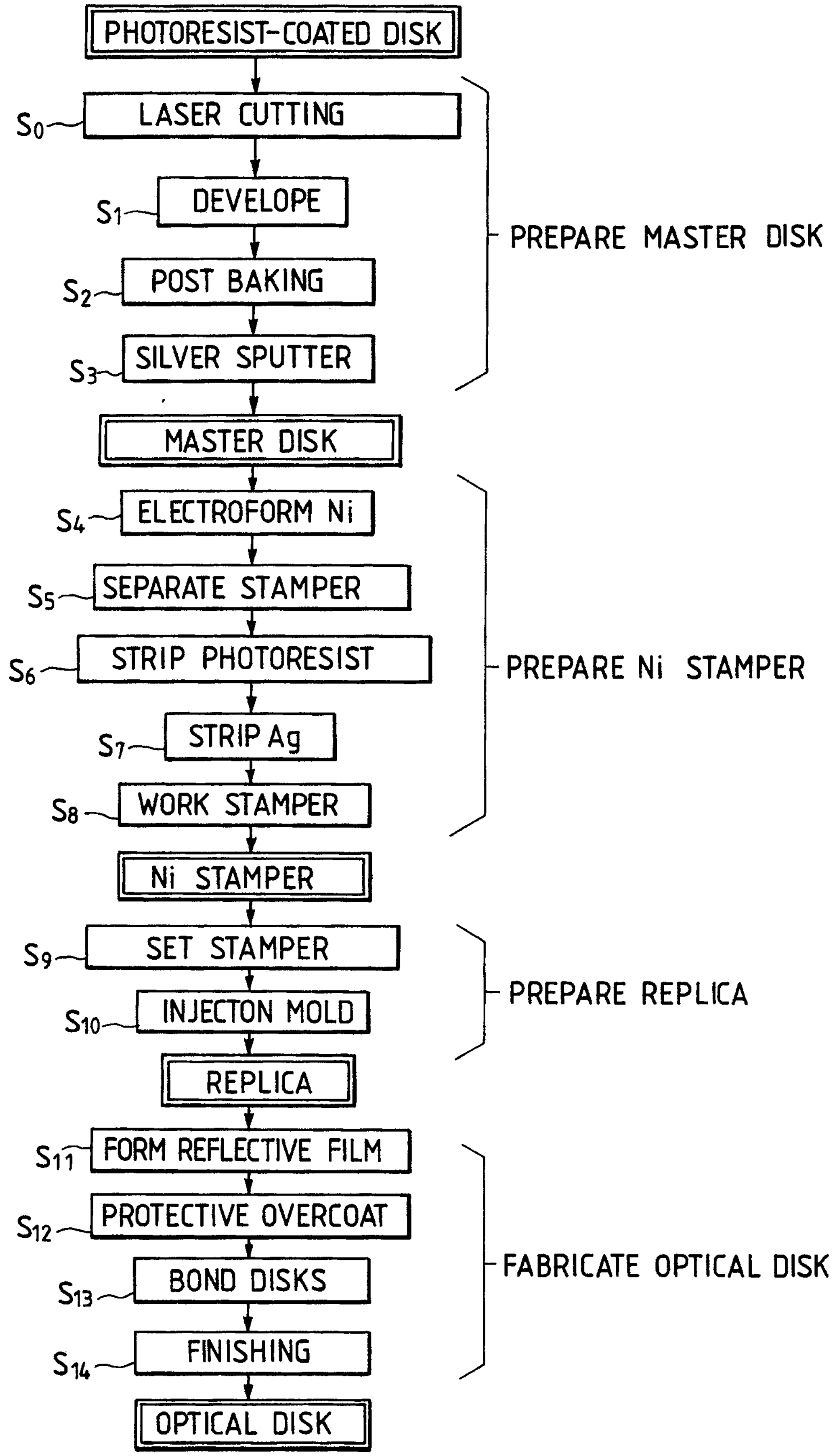
PHOTORESIST-COATED DISK
S0
LASER CUTTING
S1
DEVELOPE
S2
POST BAKING
S3
SILVER SPUTTER
PREPARE MASTER DISK
MASTER DISK
S4
ELECTROFORM Ni
S5
SEPARATE STAMPER
S6
STRIP PHOTORESIST
S7
STRIP Ag
S8
WORK STAMPER
PREPARE Ni STAMPER
Ni STAMPER
S9
SET STAMPER
S10
INJECTON MOLD
PREPARE REPLICA
REPLICA
S11
FORM REFLECTIVE FILM
S12
PROTECTIVE OVERCOAT
S13
BOND DISKS
S14
FINISHING
FABRICATE OPTICAL DISK
OPTICAL DISK

FIG. 4A

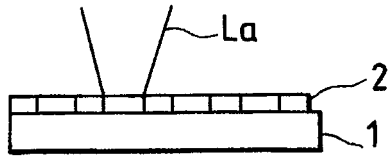


FIG. 4B

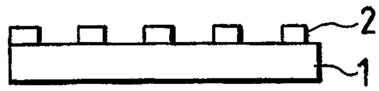


FIG. 4C

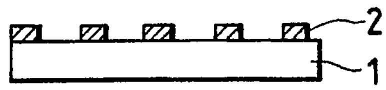


FIG. 4D

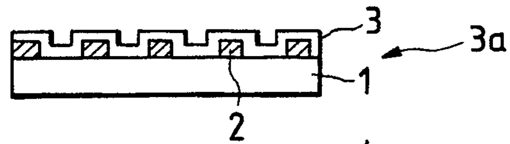


FIG. 4E

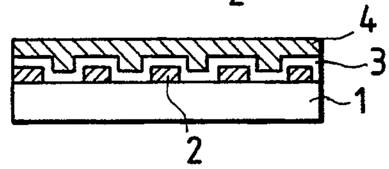


FIG. 4F

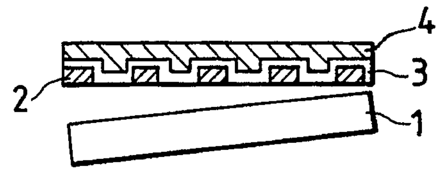


FIG. 4G

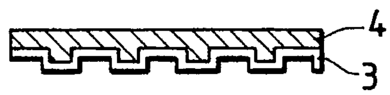


FIG. 4H

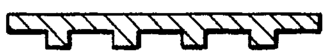

FIG. 4I

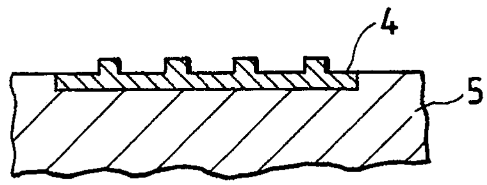


FIG. 4J

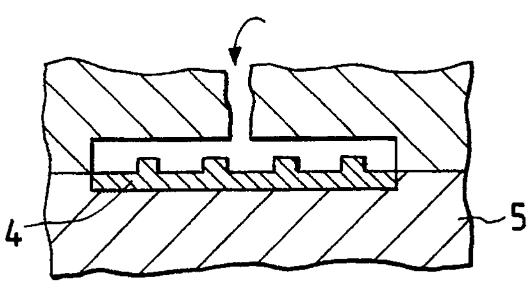


FIG. 4K